# DEMANDE DE BREVET EUROPEEN

(11) **EP 4 223 404 A1**
(43) Date de publication de la demande: **09.08.2023**
(21) Numéro de dépôt: 23153401.7
(22) Date de dépôt: 26.01.2023
(51) Int. Cl.: B01J 8/00, B01J 15/00, B01J 19/32, B01J 4/00, B66C 1/10, B66C 1/42, B01D 47/14, B66C 1/62

(54) **DISPOSITIF D'INSERTION D'UN TRONÇON DE GARNISSAGE**

(30) Priorité: 08.02.2022 FR 2201088
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: BABINET, Cyrille, 94400 VITRY SUR SEINE (FR); GALLOPIN, Eric, 78350 JOUY EN JOSAS (FR); LEBAIN, Gilles, 94400 VITRY SUR SEINE (FR)
(74) Mandataire: Air Liquide

(57) **Abrégé**

La présente invention concerne un dispositif d'insertion (5) d'au moins un tronçon de garnissage (2) pour une colonne de séparation gaz/liquide au sein d'une virole (3) cylindrique, caractérisé en ce qu'un module de déploiement (8) comporte un montant principal (9), centré autour d'un axe principal (11) du dispositif d'insertion, et une pluralité de montants périphériques (10) agencés de manière circonférentielle et régulière autour de l'axe principal (11), chacun des montants périphériques (10) comprenant un moyen d'accroche (6) configuré pour agripper un tronçon de garnissage (2), le module de déploiement (8) comprenant une pluralité de branches (12) agencées en duos de branches (13) reliant le montant principal (9) à l'un des montants périphériques (10), le module de déploiement (8) étant apte à modifier la dimension du dispositif d'insertion (5) en modifiant une distance radiale entre le montant principal (9) et chacun des montants périphériques (10).

## Description

La présente invention se rapporte au domaine des colonnes de séparation liquide/gaz et à leur assemblage et elle concerne plus particulièrement un dispositif d'insertion de tronçons de garnissage pour une colonne de séparation gaz/liquide dans une virole afin de former ces dites colonnes de séparation liquide/gaz.

Les colonnes de séparation gaz/liquide sont connues depuis de nombreuses années et permettent par exemple de réaliser une séparation de différents éléments chimiques entrant dans la composition d'un fluide homogène, par exemple par distillation ou par absorption.

La fabrication d'une colonne de séparation liquide/gaz comprend notamment une étape d'agrippement d'un tronçon de garnissage par un dispositif d'insertion de tronçons de garnissage afin de l'insérer par la suite au sein d'une virole cylindrique. Les tronçons de garnissages sont notamment utilisés dans les colonnes pour assurer l'échange de matière et de chaleur entre un gaz montant et un liquide descendant. Ces tronçons de garnissage, qui sont notamment constitués par une superposition de plusieurs bandes ondulées, sont souvent appelés "packs". Les tronçons de garnissage sont classiquement empilés les uns sur les autres, le cas échéant avec des séparateurs interposés, afin de participer à la séparation des composants du fluide sur la dimension axiale de la colonne.

Le dispositif d'insertion doit comprendre des moyens d'accroche permettant d'agripper un tronçon de garnissage par les côtés de celui-ci. L'agrippement peut toutefois être problématique dans la mesure où les viroles des colonnes de séparation au sein desquels doivent être insérés les tronçons de garnissage ne présentent pas toutes nécessairement le même diamètre. Dans ce contexte, les tronçons de garnissage peuvent présenter un diamètre allant de 2,5m à 5m, ce qui rend difficile l'agrippement optimal de l'ensemble d'une gamme de tronçons de garnissage.

Il est envisageable d'utiliser un dispositif d'insertion adapté à chaque diamètre de tronçon de garnissages mais une telle solution nécessite des moyens financiers trop importants pour être viable.

La présente invention s'inscrit dans ce contexte et permet d'envisager l'assemblage de colonnes de séparation liquide/gaz pour tous diamètres de tronçons de garnissage en utilisant un unique dispositif d'insertion de ces tronçons de garnissage au sein d'une virole. La présente invention propose un dispositif d'insertion d'au moins un tronçon de garnissage pour une colonne de séparation gaz/liquide au sein d'une virole cylindrique, caractérisé en ce qu'un module de déploiement comporte un montant principal, centré autour d'un axe principal du dispositif d'insertion, et une pluralité de montants périphériques agencés de manière circonférentielle et régulière autour de l'axe principal, chacun des montants périphériques comprenant un moyen d'accroche configuré pour agripper un tronçon de garnissage, le module de déploiement comprenant une pluralité de branches agencées en duos de branches reliant le montant principal à l'un des montants périphériques, le module de déploiement étant apte à modifier la dimension du dispositif d'insertion en modifiant une distance radiale entre le montant principal et chacun des montants périphériques.

Grâce au dispositif d'insertion selon l'invention, et plus particulièrement au module de déploiement, les moyens d'accroche peuvent agripper n'importe quel type de tronçon de garnissage pour une colonne de séparation gaz/liquide, de n'importe quel diamètre. Avant de procéder à l'agrippement des tronçons de garnissage, le module de déploiement est paramétré de manière à définir la distance radiale entre le montant principal et les montants périphériques, et ainsi positionner les moyens d'accroche, qui sont agencés sur les montants périphériques, les uns par rapport aux autres de manière à former un motif, notamment circulaire, de dimensions complémentaires au pourtour du tronçon de garnissage à agripper. La distance radiale est la même entre le montant principal et chacun des montants périphériques afin d'obtenir un diamètre virtuel défini par les moyens d'accroche et adapté au diamètre des tronçons de garnissage.

Le montant principal présente une dimension principale confondue avec l'axe principal. Ce dernier, autour duquel sont disposés les moyens d'accroche, peut également passer par le centre du tronçon de garnissage lorsque ce dernier est agrippé et/ou par le centre de la virole. Les montants périphériques sont tous parallèles ou sensiblement parallèles à l'axe principal. Les moyens d'accroche peuvent être agencés sur l'ensemble des montants périphériques ou seulement sur certains d'entre eux. Afin d'opérer un agrippement du tronçon de garnissage, le dispositif d'insertion comprend au moins deux moyens d'accroche. D'une manière avantageuse, les moyens d'accroche sont régulièrement répartis autour du montant principal afin d'agripper le tronçon de garnissage de manière optimale.

Les duos de branches s'étendent entre le montant principal et les montants périphériques. Il y a donc autant de duos de branches qu'il y a de montants périphériques. Les branches de chaque duo de branches sont sécantes l'une par rapport à l'autre et sont aptes à plus ou moins s'incliner de manière synchronisée l'une par rapport à l'autre. C'est cette modification d'inclinaison des branches des duos de branches qui permet de modifier la distance radiale entre le montant principal et les montants périphériques, et qui permet ainsi de modifier la dimension radiale du dispositif d'insertion et adapter cette dimension à la dimension radiale correspondante du tronçon de garnissage à manipuler.

Selon une caractéristique de l'invention, le montant principal comprend un corps télescopique apte à modifier une dimension principale du montant principal. La dimension principale du montant principal, c'est-à-dire la dimension du montant principal parallèle à l'axe principal, peut donc être modifiée grâce au corps télescopique et autant que ce dernier puisse le permettre. Le corps télescopique peut s'étendre sur l'ensemble du montant principal ou seulement sur une portion de celui-ci. Le déploiement du corps télescopique peut être contrôlé manuellement, via un opérateur agissant sur l'une des portions terminales du montant principal, ou bien être motorisé et contrôlé à distance via un moteur électrique et un module de contrôle associé.

Selon une caractéristique de l'invention, le montant principal comprend deux bagues fixes, chaque bague fixe étant agencée au niveau de chacune des portions terminales du montant principal, les deux bagues fixes étant séparées par une distance modifiable par le corps télescopique. D'une manière avantageuse, les bagues sont agencées à chacune des extrémités longitudinales du montant principal et sont fixées à celles-ci. Ainsi, lorsque le montant principal voit sa dimension principale modifiée grâce au corps télescopique, les bagues fixes peuvent être rapprochées ou éloignées l'une de l'autre en fonction de la configuration appliquée au corps télescopique. La distance entre les bagues peut donc être déterminée entre une distance minimum et une distance maximum, toutes deux dépendantes de la capacité de déploiement du corps télescopique. La distance maximum correspond ainsi à une configuration dans laquelle le montant principal est entièrement déployé, tandis que la distance minimum correspond à une configuration dans laquelle le montant principal est rétracté au maximum.

Selon une caractéristique de l'invention, chaque branche des duos de branches comprend une première extrémité fixée à l'une des bagues fixes du montant principal et une deuxième extrémité fixée au montant périphérique. Autrement dit, chaque duo de branches comprend une première branche dont la première extrémité est fixée à une première bague fixe du montant principal, et une deuxième branche dont la première extrémité est fixée à une deuxième bague fixe du montant principal. Ainsi, lorsque la dimension principale du montant principal est modifiée grâce au déploiement du corps télescopique, la distance entre les bagues fixes est également modifiée et cela entraîne par analogie une modification d'une distance entre la première extrémité de chacune des branches des duos de branches. La fixation entre les bagues fixes et la première extrémité des branches peut être diverse mais doit toutefois permettre le pivotement des branches par rapport aux bagues fixes.

La deuxième extrémité de chacune des branches étant liée au montant périphérique, chacune des branches s'étend donc entre le montant principal et l'un des montants périphériques. Tout comme la fixation entre la première extrémité de chaque branche et l'un ou l'autre des bagues fixes du montant principal, la fixation entre la deuxième extrémité de chaque branche et le montant périphérique doit être effectuée de sorte à ce que chaque branche puisse pivoter par rapport au montant périphérique.

Selon une caractéristique de l'invention, la deuxième extrémité d'au moins une des branches du duo de branches est apte à coulisser le long du montant périphérique. Pour ce faire, le montant périphérique peut par exemple comprendre une glissière au sein de laquelle coulisse la deuxième extrémité d'au moins l'une des branches du duo de branches. Les deux branches peuvent coulisser le long du montant périphérique mais il est possible de rendre l'une des deuxièmes extrémités fixe tandis que l'autre deuxième extrémité peut coulisser.

Selon une caractéristique de l'invention, I les deux branches du duo de branches sont sécantes entre elles.

De préférence elles sont liées entre elles au niveau de leur point d'intersection. Selon une caractéristique de l'invention, les branches d'un même duo de branches sont reliées l'une à l'autre par une liaison pivot sensiblement en leur centre. En d'autres termes, les deux branches d'un duo de branches sont agencées l'une par rapport à l'autre de manière à être sécantes et une liaison pivot est formé au point d'intersection des deux branches. Lorsque la longueur du montant principal est modifiée grâce au corps télescopique, la distance entre les bagues fixes et donc les premières extrémités des branches des duos de branches est modifiée. La liaison pivot permet la modification de l'inclinaison des branches du duo de branches l'une par rapport à l'autre, ce qui modifie également l'inclinaison des branches par rapport au montant périphérique correspondant, notamment grâce au coulissement d'au moins l'une des branches le long d'un montant périphérique.

Selon une caractéristique de l'invention, le dispositif d'insertion comprend des moyens de verrouillage configurés pour figer la distance radiale entre le montant principal et les montants périphériques. Les moyens de verrouillage sont mis en place une fois que la distance radiale souhaitée entre le montant principal et les montants périphériques est obtenue par la modification de la configuration du module de déploiement. Le positionnement des moyens d'accroche les uns par rapport aux autres et par rapport au montant principal est alors figé et permet d'agripper et de maintenir efficacement le tronçon de garnissage.

Selon une caractéristique de l'invention, les moyens de verrouillage sont formés par des tiges déployables s'étendant entre deux montants périphériques adjacents. Chaque montant périphérique est donc lié à deux tiges déployables s'étendant vers les deux montant périphériques adjacents. Les tiges déployables sont rigides et stabilisent donc les montants périphériques entre eux.

L'invention couvre également un système d'insertion d'au moins un tronçon de garnissage pour une colonne de séparation gaz/liquide au sein d'une virole cylindrique, comprenant une structure porteuse et un dispositif d'insertion tel que décrit précédemment, le dispositif d'insertion étant porté par la structure porteuse. Le système d'insertion dans son ensemble assure des fonctions supplémentaires comme le déplacement du dispositif d'insertion. Le système d'insertion permet d'enchaîner l'insertion d'une pluralité de tronçons de garnissage.

La structure porteuse se présente sous la forme d'un portique apte à se déplacer selon au moins une direction tout en portant le dispositif d'insertion agrippant un tronçon de garnissage. Pour opérer un tel déplacement, la structure porteuse peut par exemple être agencé sur des rails afin que le déplacement se fasse selon la direction la plus précise possible.

Tel que cela a été évoqué, l'objectif du système d'insertion selon l'invention est d'agripper des tronçons de garnissage de différents diamètres, puis d'insérer ceux-ci au sein d'une virole agencée horizontalement.

Selon une caractéristique de l'invention, le dispositif d'insertion est apte à effectuer dans son ensemble un mouvement de translation de manière relative à la structure porteuse. Indépendamment de la structure porteuse, le dispositif d'insertion peut se déplacer par exemple de manière verticale. Ce déplacement vertical est utile par exemple pour positionner le dispositif d'insertion à l'aplomb d'une pile de tronçons de garnissage, puis pour le descendre dans le but d'agripper le tronçon de garnissage disposé au sommet de la pile. Le déplacement vertical du dispositif d'insertion par rapport à la structure porteuse est également utile dans le but d'ajuster la position du tronçon de garnissage agrippé afin de positionner correctement celui-ci à l'entrée de la virole et ainsi de favoriser la poussée du tronçon de garnissage au sein de la virole. Le déplacement relatif du dispositif d'insertion par rapport à la structure porteuse peut par exemple se faire à l'aide d'un moteur embarqué sur la structure porteuse et configuré pour déplacer un élément porteur du dispositif d'insertion le long de la structure porteuse.

Selon une caractéristique de l'invention, le dispositif d'insertion est apte à effectuer dans son ensemble une rotation de manière relative à la structure porteuse. La rotation permet notamment de basculer le dispositif d'insertion, avec une structure porteuse qui reste fixe, entre une position où le dispositif d'insertion est agencé de manière verticale dans le but d'agripper un tronçon de garnissage sur une pile verticale de tronçons de garnissage, et une position où le dispositif d'insertion est agencé de manière horizontale dans le but de procéder à l'insertion du tronçon de garnissage agrippé au sein de la virole. Les éléments de rotation doivent donc être configurés pour permettre une rotation du dispositif d'insertion d'environ 90°, afin que le dispositif d'insertion puisse basculer entre les positions verticales et horizontales évoquées précédemment. La rotation relative du dispositif d'insertion par rapport à la structure porteuse peut par exemple se faire à l'aide d'un moteur apte à piloter un système à engrenages entraînant la rotation du dispositif d'insertion, ou bien encore via un système à chaîne ou un système hydraulique. L'invention couvre également un procédé d'insertion d'au moins un tronçon de garnissage au sein d'une virole cylindrique mis en oeuvre par un système d'insertion tel que décrit précédemment, comprenant :
- une étape d'ajustement de la distance radiale entre le montant principal et les montants périphériques à l'aide du module de déploiement,
- une étape d'agrippement d'un tronçon de garnissage par les moyens d'accroche du dispositif d'insertion,
- une étape de rotation dans son ensemble du dispositif d'insertion par rapport à la structure porteuse,
- une étape de déplacement du système d'insertion jusqu'à la virole grâce à la structure porteuse,
- une étape de positionnement du tronçon de garnissage au niveau d'une entrée de la virole,
- une étape de poussée du tronçon de garnissage au sein de la virole.

Les étapes du procédé se font à l'aide des différents éléments évoqués précédemment du système d'insertion. Tel que cela a été décrit précédemment, le module de déploiement assure l'étape d'ajustement de la distance radiale entre le montant principale et les montants périphériques. Par la suite, l'étape d'agrippement se fait à l'aide des moyens d'accroche du dispositif d'insertion, l'étape de rotation à l'aide des éléments de rotation embarqués sur la structure porteuse, l'étape de déplacement via la structure porteuse, et l'étape de positionnement à l'aide des moyens de mise en translation du dispositif d'insertion par rapport à la structure porteuse. Ces cinq premières étapes étant effectuées, l'étape de poussée peut se faire à l'aide de dispositifs télescopiques insérant le tronçon de garnissage au sein de la virole. Il convient de noter qu'il s'agit ici d'une liste d'étapes non exhaustive pour le bon déroulement du procédé d'insertion de tronçons de garnissage au sein de la virole selon l'invention. A titre d'exemple non limitatif, on pourra prévoir dans le procédé selon l'invention une étape de contrôle du bon positionnement du tronçon de garnissage une fois inséré dans la virole. Cette étape additionnelle, venant ici à la suite de l'étape de poussée, consiste alors en une vérification et un enregistrement de la bonne position du tronçon de garnissage qui vient d'être inséré, à l'aide d'un appareil de mesure précis au millimètre.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig. 1] est une vue générale d'un système d'insertion selon l'invention lors de l'insertion d'un tronçon de garnissage pour une colonne de séparation gaz/liquide au sein d'une virole,
[Fig. 2] représente le système d'insertion de la figure 1 dont des éléments sont en prise sur un tronçon de garnissage pour une colonne de séparation gaz/liquide, la figure rendant notamment visible la structure d'un module de déploiement permettant d'agripper des tronçons de garnissage d'une taille souhaitée,
[Fig. 3] est une représentation schématique d'un détail du module de déploiement visible sur la figure 2, dans une première position resserrée,
[Fig. 4] est une représentation schématique d'un détail du module de déploiement visible sur la figure 2, dans une deuxième position déployée,
[Fig. 5] représente une étape d'agrippement d'un tronçon de garnissage d'un procédé d'insertion de tronçons de garnissage,
[Fig. 6] représente une étape de rotation du dispositif d'insertion et de déplacement du système d'insertion du procédé d'insertion de tronçons de garnissage pour une colonne de séparation gaz/liquide,
[Fig. 7] représente une étape d'insertion du tronçon de garnissage du procédé d'insertion de tronçons de garnissage pour une colonne de séparation gaz/liquide.

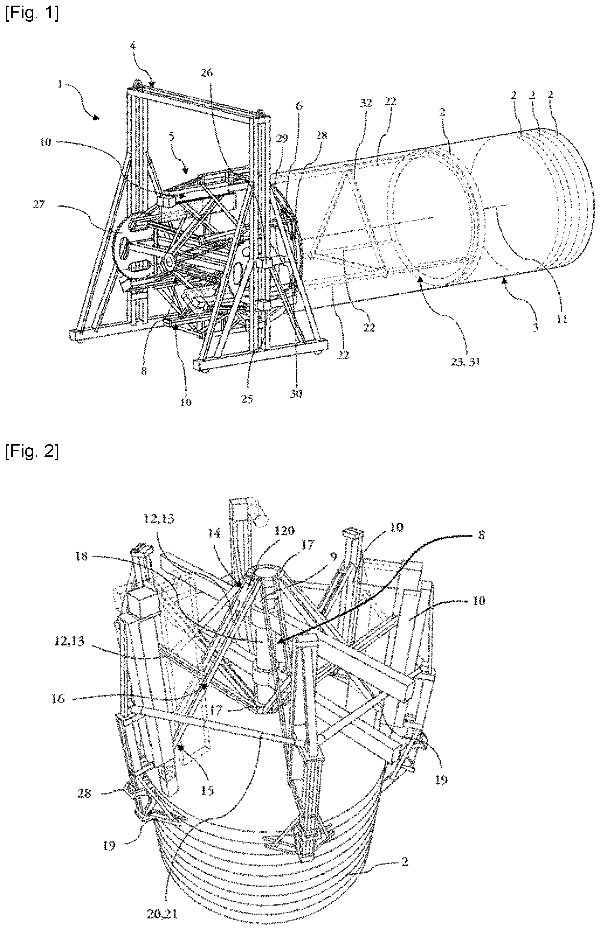

La figure 1 représente un système d'insertion 1 de tronçons de garnissage 2 pour une colonne de séparation gaz/liquide au sein d'une virole dans le but de former une colonne de séparation gaz/liquide. De telles colonnes de séparation se présentent par exemple sous une forme cylindrique à section circulaire ou sensiblement circulaire. Les colonnes de séparation peuvent présenter une dimension principale de plusieurs dizaines de mètres et une section cylindrique de plusieurs mètres. Les tronçons de garnissage 2 pour une colonne de séparation gaz/liquide amenés à être insérés au sein de ces colonnes de séparation peuvent présenter une section circulaire ou sensiblement circulaire d'un diamètre de l'ordre de 2,5m à 5m.

Ici le système d'insertion 1 permet une insertion à l'horizontale des tronçons de garnissage au sein de la virole, ce qui peut notamment être avantageux pour des raisons d'encombrement mécanique en termes de hauteur rendant impossible l'opération d'insertion des tronçons de garnissage lorsque la virole est agencée verticalement, ladite opération est ici effectuée avec la virole en position horizontale. Il convient toutefois de noter que cet agencement du système d'insertion et l'insertion des tronçons de garnissage 2 selon une direction horizontale tel qu'illustré pourraient être autres sans sortir du contexte de l'invention, dès lors que le système d'insertion comporte un module de déploiement tel qu'il va être décrit ci-après.

Le système d'insertion 1 de tronçons de garnissage selon l'invention permet d'opérer un procédé d'insertion desdits tronçons de garnissage 2 au sein de la virole. Un tel système d'insertion 1 permet notamment d'agripper un tronçon de garnissage 2 sur une pile 24 verticale de tronçons de garnissage tel que cela est illustré sur la figure 1. Le système d'insertion 1 permet par la suite d'effectuer une rotation afin d'agencer le tronçon de garnissage 2 en regard d'une entrée de la virole, de se déplacer jusqu'à l'entrée de la virole, puis de pousser le tronçon de garnissage 2 jusqu'au fond de la virole ou contre un autre tronçon de garnissage 2 déjà inséré au sein de la virole, en assurant une avancée la plus fluide possible, c'est-à-dire avec le moins d'à-coups possible, du tronçon de garnissage 2 au sein de la virole.

Pour ce faire, le système d'insertion 1 comprend une structure porteuse 4, ainsi qu'un dispositif d'insertion 5 agencé sur la structure porteuse 4, et comprenant notamment des moyens d'accroche 6 permettant d'agripper les tronçons de garnissage 2. La structure porteuse 4 se présente sous la forme d'un portique comprenant deux piliers 7 entre lesquels repose le dispositif d'insertion 5. La structure porteuse 4 peut par exemple être montée sur rails afin que le système d'insertion 1 puisse opérer un déplacement linéaire entre la pile 24 de tronçons de garnissage 2 et la virole.

Dans l'exemple illustré, le système d'insertion 1 comprend un premier moteur 25 permettant au dispositif d'insertion 5 d'effectuer dans son ensemble un mouvement de translation par rapport à la structure porteuse 4. Le système d'insertion 1 comprend également un deuxième moteur 26 permettant d'actionner un système d'engrenages 27 permettant de déplacer le dispositif d'insertion 5 dans son ensemble de sorte à effectuer une rotation de manière relative à la structure porteuse 4. Cette rotation permet de faire passer le dispositif d'insertion d'une position verticale à une position horizontale, de manière à pouvoir agencer le tronçon de garnissage 2 en regard de l'entrée de la virole tel que mentionné précédemment.

Comme cela a été mentionné précédemment, le diamètre des tronçons de garnissage peut varier entre 2,5m et 5m. Avant de procéder à l'agrippement des tronçons de garnissage, il est important de pouvoir adapter le dispositif d'insertion au diamètre de tronçon de garnissage considéré, et ce afin que les moyens d'accroche puissent agripper les tronçons de garnissage de manière optimale et la plus fiable possible. Ainsi, avant de procéder à l'étape d'agrippement du tronçon de garnissage au cours du procédé d'insertion de celui-ci, le dispositif d'insertion doit être dimensionné de manière adéquate.

Pour ce faire, le dispositif d'insertion 5 comprend un module de déploiement 8 comprenant les moyens d'accroche 6. Plus particulièrement, le module de déploiement 8 comprend un montant principal 9 et une pluralité de montants périphériques 10 parallèles au montant principal 9. Le montant principal 9 s'étend principalement selon un axe principal 11 passant par le centre ou sensiblement par le centre du tronçon de garnissage 2 agrippé. Les montants périphériques 10 sont agencés de manière circonférentielle et régulière autour du montant principal 9. C'est au niveau des montants périphériques 10 que sont agencés les moyens d'accroche 6 évoqués précédemment. Le module de déploiement 8 comprend au moins deux montants périphériques 10. D'une manière avantageuse, et tel que cela est notamment visible sur la figure 2, le module de déploiement comprend au moins six montants périphériques.

Chaque montant périphérique 10 est mécaniquement relié au montant principal 9 par deux branches 12 formant un duo de branches 13. Chacune des deux branches 12 comprend une première extrémité 14 liée au montant principal 9, et une deuxième extrémité 15 liée au montant périphérique 10. De plus, les deux branches 12 du duo de branches 13 sont sécantes entre elles et sont liées entre elles au niveau de leur point d'intersection, c'est-à-dire sensiblement en leur centre, par une liaison pivot 16. Dans l'exemple illustré, chaque branche 12 est formée de deux montants parallèles rendues solidaires l'une de l'autre par une entretoise 120, ces entretoises maintenant l'écartement des branches l'une de l'autre. Pour un duo de branches 13, les branches 12 présentent un écartement différent entre leurs montants, de sorte qu'une première branche, dont les montants sont plus écartés que ceux de la deuxième branche, encadre la deuxième branche au niveau du point d'intersection. Les montants d'une des branches présentent chacun un pion dirigé vers les montants de l'autre branche et apte à s'engager respectivement dans un orifice correspondant formé dans l'un des montants de l'autre branche.

C'est notamment grâce aux duos de branches 12 du module de déploiement 8, et plus particulièrement grâce à la modification d'une inclinaison des branches de chaque duo de branches, qu'une distance radiale entre le montant principal 9 et les montants périphériques 10 peut être réglée et que les moyens d'accroche 6, agencés sur lesdits montants périphériques 10, peuvent ainsi être rapprochés ou éloignés de l'axe principal selon un diamètre adaptable et assurant ainsi une compatibilité avec une large gamme de diamètres de tronçons de garnissage. Cette modification de la distance radiale se fait de manière simultanée entre le montant principal et l'ensemble des montants périphériques. Les détails concernant le fonctionnement du module de déploiement seront décrits par la suite.

Grâce au module de déploiement, les moyens d'accroche sont ainsi positionnés, et notamment écartés les uns par rapport aux autres, pour saisir correctement le tronçon de garnissage, et ce peu importe le diamètre de celui-ci.

Une fois la distance radiale souhaitée établie, celle-ci peut être figée par un moyen de verrouillage 20. Le moyen de verrouillage 20 peut par exemple être associé à une pluralité de tiges déployables 21 s'étendant entre deux montants périphériques 10 adjacents, tel que cela est illustré sur la figure 1.

Du fait de la prise du tronçon de garnissage 2 par la tranche, associé au fait que les tronçons de garnissage 2 présentent une forme cylindrique à section circulaire ou sensiblement circulaire, les moyens d'accroche 6 présentent une forme d'arc de cercle, et ce afin que l'ensemble du moyen d'accroche 6 destiné à être au contact du tronçon de garnissage 2 épouse un rayon de courbure de celui-ci. L'agrippement du tronçon de garnissage 2 est ainsi facilité et plus stable. Afin que l'agrippement du tronçon de garnissage 2 par les moyens d'accroche 6 soit optimal, la courbure de l'arc de cercle formé par les moyens d'accroche 6 est réglable afin de s'adapter à tous diamètres de tronçons de garnissage 2.

Après agrippement du tronçon de garnissage 2 par les moyens d'accroche 6, ces derniers peuvent être pilotés de manière individuelle l'un par rapport à l'autre dans le but de pousser sur un point précis du tronçon de garnissage 2 et déformer localement ce dernier. Une telle déformation locale peut être préconisée lorsqu'un différentiel de forme existe entre le tronçon de garnissage 2 et la virole au sein de laquelle le tronçon de garnissage 2 est destiné à être inséré. La déformation locale permet ainsi de modifier légèrement la forme du tronçon de garnissage 2 afin que celui-ci puisse par la suite être inséré dans la virole de manière plus aisée.

Au moins deux montants périphériques 10 comprennent chacun un crochet 28. Lorsque le dispositif d'insertion 5 est disposé à proximité de la virole 3 dans le but d'y insérer par la suite un tronçon de garnissage 2, les crochets 28 viennent se refermer sur la virole 3, par exemple sur une collerette 29 s'étendant de manière circonférentielle autour de la virole 3 au niveau de l'extrémité de la virole 3 par laquelle les tronçons de garnissage 2 sont insérés. Les crochets 28 assurent ainsi un maintien mécanique de la virole 3 en regard du dispositif d'insertion 5, y compris pendant l'insertion du tronçon de garnissage 2 au sein de la virole 3. La présence de ces crochets 28 permet d'effectuer un contrepoids suffisant pour retenir la virole 3 malgré les forces exercées sur celle-ci lors de l'insertion des tronçons de garnissage 2. Les crochets 28 évitent ainsi la présence d'un encombrant contrepoids disposé à l'arrière de la virole 3 pour bloquer celle-ci lors de la poussée du tronçon de garnissage 2.

Afin de pouvoir se refermer sur la collerette 29 de la virole 3, les crochets 28 doivent s'étendre le long de chacun des montants périphériques 20, au-delà des moyens d'accroche 6 également portés par les montants périphériques 20. Cette extension peut créer une gêne mécanique lorsque les moyens d'accroche 6 agrippent un tronçon de garnissage 2 sur la pile de tronçons de garnissage, particulièrement lorsque le dernier tronçon de garnissage 2 de la pile est agrippé, les crochets 28 pouvant faire butée sur le sol. Pour pallier cela, chacun des crochets 28 est monté sur un vérin rétractable 30 afin d'escamoter les crochets 28 et d'éviter toute contrainte mécanique liée à un crochet 28 déployé. Les crochets 28 sont ainsi mobiles entre une position escamotée, notamment lorsque le dispositif d'insertion 5 est en position verticale pour agripper les tronçons de garnissage 2 et une position déployée permettant de fixer le dispositif d'insertion 5 à la virole 3 au moment où le tronçon de garnissage 2 agrippé est maintenu au niveau de l'extrémité de la virole 3. Lorsque les crochets 28 sont en position déployée, ceux-ci sont configurés pour éviter toute interférence mécanique avec le moyen d'accroche 6 disposé sur le même montant périphérique 10. Afin d'éviter lesdites interférences mécaniques, les crochets 28 peuvent présenter une forme particulière et/ou s'escamoter et s'étendre en pivotant autour du montant périphérique 10 considéré, le pivotement se faisant à l'opposé du montant principal afin de ne pas entrer en contact avec le moyen d'accroche 6.

Au moins deux des montants périphériques 10 sont pourvus de dispositifs télescopiques 22. Les dispositifs télescopiques 22 peuvent être agencés sur un montant périphérique 10 également pourvu d'un moyen d'accroche 6, l'essentiel étant que l'ensemble de ces éléments n'interfèrent pas mécaniquement les uns par rapport aux autres. Les dispositifs télescopiques 22 permettent d'opérer une poussée du tronçon de garnissage 2 une fois celui-ci mis en place en regard de la virole. Cette poussée est effectuée dès lors que les moyens d'accroche 6 ont été commandés pour lâcher le tronçon de garnissage 2. Les dispositifs télescopiques 22 se déploient afin de pousser le tronçon de garnissage 2 jusqu'au bout de la virole, et ce peu importe la longueur de cette dernière. Si un ou plusieurs tronçons de garnissage 2 ont déjà été précédemment insérés dans la virole, les dispositifs télescopiques poussent le tronçon de garnissage 2 jusqu'à ce que ce dernier soit au contact du tronçon de garnissage 2 précédemment inséré.

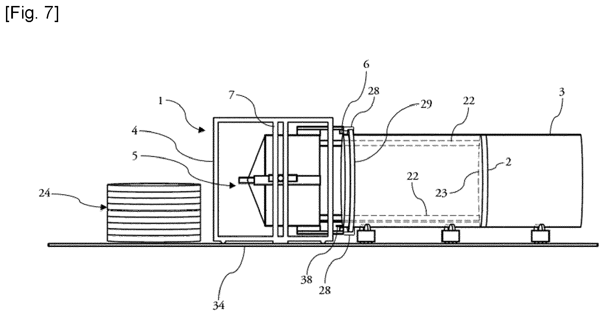

Afin que l'insertion du tronçon de garnissage 2 au sein de la virole soit effectuée de manière uniforme, avec le minimum d'à-coups, le dispositif d'insertion 5 comprend un moyen de poussée 23 fixé à l'extrémité de chaque dispositif télescopique 22, tel que cela est plus particulièrement visible sur la figure 7, ce moyen de poussé étant destiné à être en contact direct avec le tronçon de garnissage 2 au cours de l'insertion. Le moyen de poussée 23 répartit mécaniquement les forces exercées par chacun des dispositifs télescopiques 22 en appuyant sur tout le pourtour du tronçon de garnissage 2, de manière à éviter la localisation des forces uniquement au niveau de l'extrémité des dispositifs télescopiques 22. Le moyen de poussée 23 permet ainsi d'éviter d'endommager le tronçon de garnissage 2 inséré à cause d'une force de poussée localisée. Lorsque les dispositifs télescopiques 22 sont repliés, le moyen de poussée 23 est disposé au voisinage des montants périphériques 10. Les dispositifs télescopiques et le moyen de poussée tels qu'illustrés sur la figure 1 constituent un exemple de moyens d'insertion du tronçon de garnissage, mais ce dernier pourrait être inséré d'autres manières et avec d'autres moyens sans sortir du contexte de l'invention, dès lors que le dispositif d'insertion met en oeuvre un module de déploiement conformément à l'invention. A titre d'exemple, tel qu'illustré sur la figure 1, le dispositif d'insertion 5 comprend six montants périphériques 10 dont trois d'entre eux sont pourvus de dispositifs télescopiques 22. La répartition des dispositifs télescopiques 22 est effectuée de manière régulière autour de l'axe principal 11.

Afin de procéder à l'insertion de tronçons de garnissage 2 pouvant atteindre des diamètres conséquents, chacun des dispositifs télescopiques 22 présente une force de poussée d'au moins 1t. Cette force de poussée est répartie sur tout le pourtour du tronçon de garnissage 2 à l'aide du moyen de poussée 23.

Les dispositifs télescopiques 22 se déploient au moment où le tronçon de garnissage 2 est positionné en regard de l'entrée de la virole 3. Lorsque l'insertion du tronçon de garnissage 2 est initiée, le moyen de poussée 23 est entraîné par le déploiement des dispositifs télescopiques 22 et vient au contact du tronçon de garnissage 2. La zone de contact du moyen de poussée 23 au niveau du tronçon de garnissage 2 correspond au moins à une zone annulaire périphérique 31 rapportée sur le tronçon de garnissage 2 poussé. La zone annulaire périphérique 31 est ainsi en regard d'une périphérie du tronçon de garnissage 2, c'est-à-dire au voisinage d'un bord du tronçon de garnissage 2.

Lors de la poussée du tronçon de garnissage 2, la force exercée par les dispositifs télescopiques 22, et par analogie par le moyen de poussée 23, est préférentiellement localisée au niveau de la périphérie du tronçon de garnissage 2 car c'est au niveau de la périphérie que les forces opposées à la poussée se manifestent, notamment les forces de frottement du tronçon de garnissage 2 contre les parois de la virole 3. La poussée effectuée au niveau de la zone annulaire périphérique 31 permet donc de compenser les forces de frottements exercées sur le tronçon de garnissage 2 lors de l'insertion de celui-ci au sein de la virole 3. La compensation des forces de frottement est particulièrement efficace avec le dispositif d'insertion 5 selon l'invention car le moyen de poussée 23 est agencé au plus proche de la localisation de ces forces de frottement. Tel que cela est illustré sur la figure 1, le moyen de poussée 23 présente avantageusement une forme annulaire dont la dimension radiale correspond à la dimension de la zone annulaire périphérique 31 du tronçon de garnissage 2.

Le module de déploiement permettant de s'adapter à différents diamètres de tronçon de garnissage 2, plusieurs moyens de poussée 23 de dimensions différentes sont conçus et l'installation du moyen de poussée 23 adéquat est effectuée après la détermination de la distance radiale adéquate entre le montant principal et les montants périphériques 10.

Malgré la répartition régulière des dispositifs télescopiques 22 et la présence du moyen de poussée 23, il est possible qu'une force de frottement exercée sur le tronçon de garnissage 2 en cours d'insertion soit plus intense localement. Cette force de frottement localisée peut être due à une position horizontale de la virole 3 et/ou celle du tronçon de garnissage 2. La gravité peut effectivement entraîner un contact plus appuyé du tronçon de garnissage 2 contre la paroi de la virole 3, provoquant ainsi une dissymétrie des forces conséquentes au contact du tronçon de garnissage 2 contre la virole 3. D'autres facteurs générant une force de frottement localisée peuvent entrer en compte, comme par exemple un état de surface de la paroi de la virole 3 ou un état de surface de la tranche du tronçon de garnissage 2. Afin d'équilibrer la force de poussée, chaque dispositif télescopique 22 peut être contrôlé individuellement l'un par rapport à l'autre afin d'intensifier l'une ou l'autre des forces de poussée de manière à compenser une force de frottement locale élevée. Afin de détecter ces forces de frottement locales, chaque extrémité de chaque dispositif télescopique 22 peut par exemple comprendre un capteur de résistance mesurant les forces de frottement et donc apte à détecter une force de frottement élevée.

Lorsque les dispositifs télescopiques 22 se déploient pour pousser le tronçon de garnissage 2 au sein d'une virole 3 présentant une longueur importante, par exemple plusieurs dizaines de mètres, les dispositifs télescopiques 22 se déploient jusqu'à atteindre une longueur conséquente pouvant nuire à leur stabilité. Le dispositif d'insertion 5 peut donc comprendre un organe de maintien 32 relié à l'ensemble des dispositifs télescopiques 22 et agencé de sorte à être sensiblement à égale distance entre le moyen de poussée 23 et l'entrée de la virole 3. L'organe de maintien 32 a pour fonction de maintenir la position de chacun des dispositifs télescopiques 22 ainsi que la distance entre chacun d'entre eux. L'organe de maintien 32 participe donc à la répartition des forces exercées sur le tronçon de garnissage 2 inséré. L'organe de maintien 32 assure également la stabilité des dispositifs télescopiques 22, en évitant de potentielles flexions de ces derniers pouvant survenir en cas d'extension à une longueur élevée desdits dispositifs télescopiques 22. Tel que cela est illustré en figure 1, l'organe de maintien 32 présente une forme triangulaire afin de maintenir trois dispositifs télescopiques 22 équitablement répartis autour de l'axe principal 11. La forme de l'organe de maintien 32 peut toutefois varier en fonction du nombre de dispositifs télescopiques 22 inclus dans le dispositif d'insertion 5. Dans une variante non représentée, l'organe de maintien 32 peut comporter un jeu de roulettes, disposées chacune dans le prolongement des branches de l'organe de maintien, au-delà des dispositifs télescopiques, qui sont respectivement au contact de la face interne de la paroi périphérique de la virole. On vise alors à assurer un guidage continu de l'organe de maintien au sein de la virole lors du déploiement des dispositifs télescopiques et l'insertion d'un tronçon de garnissage. Ce guidage continu, par contact d'au moins une des roulettes contre la virole, permet de faciliter l'insertion malgré le poids de l'ensemble formé par les bras télescopiques et le moyen de poussée 23 qui pourrait amener l'ensemble à se désaxer. De manière alternative ou complémentaire, le moyen de poussée peut également comporter une ou plusieurs roulettes agencées en périphérie pour être au contact de la face interne de la paroi tubulaire de la virole lors de l'insertion des tronçons de garnissage au sein de la virole.

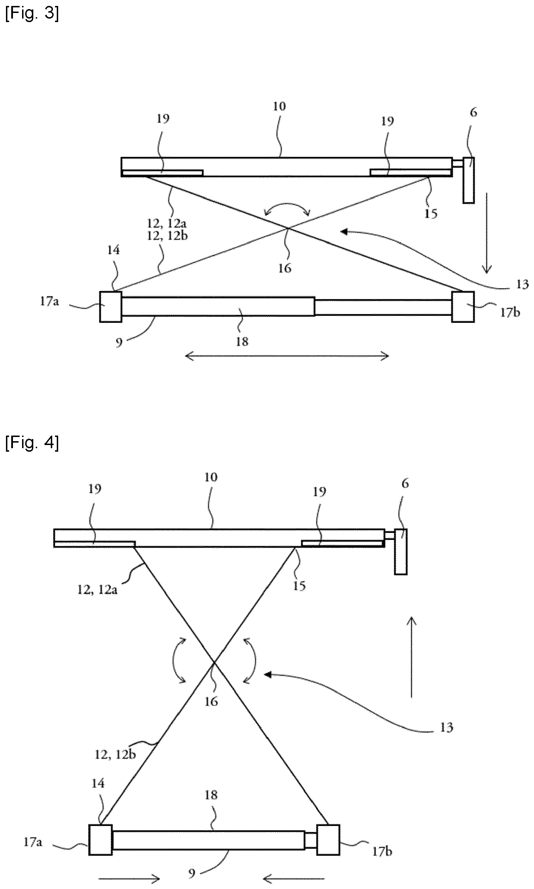

La figure 2 rend plus particulièrement visible le module de déploiement, ici représenté sans la structure porteuse associée. Le fonctionnement du module de déploiement va être plus particulièrement décrit en référence à cette figure 2 et aux figures 3 et 4, et il va notamment être décrit comment la distance radiale entre le montant principal et les montants périphériques est modifiée.

Le montant principal 9 comprend deux bagues fixes 17, chacune des bagues fixes 17 étant agencée au niveau de chaque portion terminale dudit montant principal 9. Le montant principal 9 comprend un corps télescopique 18 apte à modifier une dimension principale du montant principal 9. Ainsi, en modifiant la longueur du montant principal 9, il est possible d'augmenter ou de réduire la distance entre les deux bagues fixes 17. La longueur du montant principal 9 peut être réglée de manière manuelle ou via un organe de contrôle non représenté. Le corps télescopique 18 permet de modifier la longueur du montant principal 9 en déployant ou rétractant au moins l'une des portions terminales de celui-ci.

La première extrémité 14 de chaque branche 12 du duo de branches 13 reliant le montant principal 9 à l'un des montants périphériques 10 est plus particulièrement liée à l'une des bagues fixes 17 agencées sur le montant principal 9. Chaque duo de branches 13 comprend ainsi une première branche 12a dont la première extrémité 14 est liée à une première bague fixe 17a, et une deuxième branche 12b dont la première extrémité 14 est liée à une deuxième bague fixe 17b. La deuxième extrémité 15 des deux branches 12 est quant à elle fixée sur le montant périphérique 10 et au moins l'une d'entre elles peut coulisser le long de celui-ci, par exemple à l'aide d'une glissière 19 formée au niveau de l'une des faces du montant périphérique 10. Dans l'exemple illustré, deux glissières 19 sont représentées pour que chacune des deuxièmes extrémités 15 soit montée coulissante le long du montant périphérique correspondant, mais il convient de noter qu'une seule des deux deuxièmes extrémités 15 pourrait coopérer avec une glissière sans sortir du contexte de l'invention, dès lors que le glissement de cette deuxième extrémité permet de ne pas bloquer le déploiement du corps télescopique.

Ainsi, lorsque la longueur du montant principal 9 est modifiée grâce au corps télescopique 18, la distance entre les bagues fixes 17 et donc la distance entre les premières extrémités 14 de chacune des deux branches 12 sont également modifiées. Les branches 12 étant reliées en un point formant liaison pivot 16, ce point tend à se rapprocher ou s'éloigner du montant principal 9 en fonction de l'écartement ou du rapprochement l'une de l'autre des premières extrémités 14. Le mouvement du corps télescopique 18 entraîne de la sorte une modification de l'inclinaison des branches 12 de chacun des duos de branches 13 et modifie ainsi la distance radiale entre le montant principal 9 et les montants périphériques 10. Tel que cela a été évoqué précédemment, le module de déploiement 8 a ainsi comme fonction de modifier une distance radiale entre le montant principal 9 et chacun des montants périphériques 10, les moyens d'accroche 6 pour agripper le tronçon de garnissage étant agencés sur lesdits montants périphériques 10, que ceux-ci soient associés ou non à des dispositifs télescopiques 22 tels qu'évoqués précédemment et pour lesquels un boîtier d'actionnement du dispositif télescopique a été représenté en pointillé sur la figure 2. Les moyens d'accroche 6 peuvent ainsi être écartés pour pouvoir être en prise autour de tronçons de garnissage 2 de différents diamètres. Plus la longueur du montant principal 9 est élevée, plus les bagues fixes 17 sont éloignées l'une par rapport à l'autre, et plus les montants périphériques 10 sont proches du montant principal 9, adaptant le dispositif d'insertion 5 à un petit diamètre de tronçon de garnissage 2. A l'inverse, plus la longueur du montant principal 9 est faible, plus les bagues fixes 17 sont rapprochées l'une par rapport à l'autre, et plus les montants périphériques 10 sont éloignés du montant principal 9, adaptant le dispositif d'insertion 5 à un grand diamètre de tronçon de garnissage 2. Le module de déploiement 8 telle qu'il vient d'être évoqué permet donc d'adapter le dispositif d'insertion 5 à une pluralité de diamètres de tronçons de garnissage 2 et de viroles.

La figure 3 illustre un premier exemple d'inclinaison du duo de branches 13 de sorte à définir une distance radiale minimum entre le montant principal 9 et les montants périphériques 10. Dans cette configuration, le corps télescopique 18 est déployé au maximum afin que la longueur du montant principal 9 soit la plus élevée possible et que les bagues fixes 17a, 17b soient séparées l'une de l'autre par la plus longue distance possible. Pour chacun des duos de branches 13, les premières extrémités 14 de chaque branche 12 suivent le mouvement d'écartement des bagues fixes et sont alors éloignées au maximum l'une de l'autre, ce qui a un effet sur l'angle d'ouverture entre les deux branches au niveau de la liaison pivot 16. Il résulte de cette modification de la configuration du duo de branches 13, ici de son aplatissement, et de la liaison entre la deuxième extrémité de chaque branche 12 de ce duo de branches 13 et le montant périphérique 10 correspondant que le montant périphérique concerné se rapproche du montant principal et réduit ainsi la distance radiale entre eux. Afin de ne pas bloquer le déplacement radial du montant périphérique en direction du montant principal 9, au moins l'une des deuxièmes extrémités 15 des branches 12 du duo de branches 13 coulisse le long du montant périphérique 10 correspondant. Dans cette configuration, les moyens d'accroche 6 sont ainsi rapprochés au maximum les uns des autres, ce qui est compatible pour un agrippement de tronçons de garnissage de petit diamètre.

Il convient de noter que le déploiement du seul montant principal 9 génère une modification simultanée, et dans des proportions égales, de la configuration de chaque duo de branches. On comprend que dans ce contexte, une fois les montants périphériques 10 se rapprochent simultanément du montant principal et dans les mêmes proportions.

La figure 4 illustre un deuxième exemple d'inclinaison du duo de branches 13 de sorte à définir une distance radiale maximum entre le montant principal 9 et les montants périphériques 10. Dans cette configuration, le corps télescopique 18 est rétracté au maximum afin que la longueur du montant principal 9 soit la plus faible possible et que les bagues fixes 17a, 17b soient séparées l'une de l'autre par la plus courte distance possible. Pour chacun des duos de branches 13, les premières extrémités 14 de chaque branche 12 suivent le mouvement de rapprochement des bagues fixes et sont alors rapprochées au maximum l'une de l'autre, ce qui a un effet sur l'angle d'ouverture entre les deux branches au niveau de la liaison pivot 16. Il résulte de cette modification de la configuration du duo de branches 13, ici de son élargissement, et de la liaison entre la deuxième extrémité de chaque branche 12 de ce duo de branches 13 et le montant périphérique 10 correspondant que le montant périphérique concerné s'éloigne du montant principal et augmente ainsi la distance radiale entre eux. Afin de ne pas bloquer le déplacement radial du montant périphérique en direction du montant principal 9, au moins l'une des deuxièmes extrémités 15 des branches 12 du duo de branches 13 coulisse le long du montant périphérique 10 correspondant. Dans cette configuration, les moyens d'accroche 6 sont ainsi éloignés au maximum les uns des autres, ce qui est compatible pour un agrippement de tronçons de garnissage de grand diamètre.

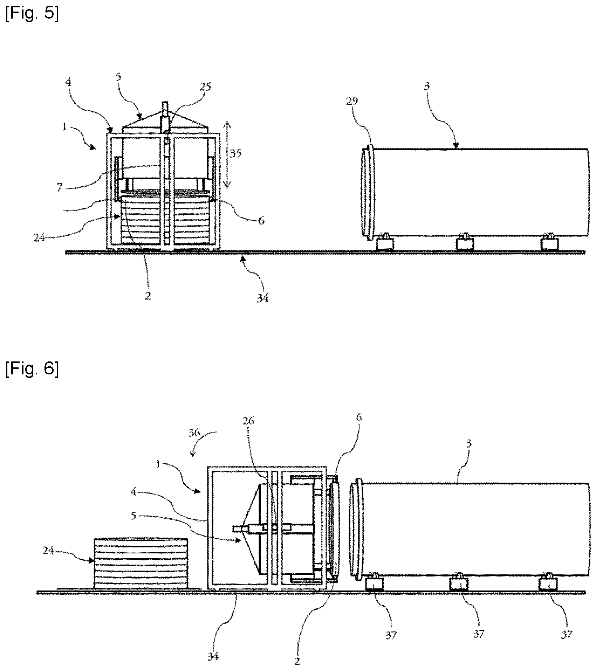

Les figures 5 à 7 illustrent schématiquement un exemple de déroulé du procédé d'insertion d'un tronçon de garnissage 2 selon l'invention.

Comme cela a été décrit précédemment, c'est le système d'insertion 1 dans son ensemble, c'est-à-dire le dispositif d'insertion 5 et la structure porteuse 4, qui permet de mettre en oeuvre le procédé d'insertion. Les figures 5 à 7 illustrent le procédé d'insertion une fois l'étape d'ajustement achevée, c'est-à-dire après que la distance radiale entre le montant principal et les montants périphériques du module de déploiement a été déterminée et que les moyens d'accroche sont prêts à agripper les tronçons de garnissage. Ainsi, la figure 5 représente notamment une étape d'agrippement d'un tronçon de garnissage 2 sur la pile 24 verticale de tronçons de garnissage 2. Pour cela, le système d'insertion 1 peut se déplacer dans son ensemble jusqu'à la pile 24 de tronçons de garnissage, par exemple à l'aide de rails 34 tel qu'évoqué précédemment.

Le dispositif d'insertion 5 est apte à effectuer dans son ensemble un mouvement de translation 35 par rapport à la structure porteuse 4, par exemple une translation le long des piliers 7 de manière verticale, c'est-à-dire de manière parallèle auxdits piliers 7. Ce mouvement de translation 35 peut être assurée par exemple par le premier moteur 25 actionné à distance. Ce mouvement de translation 35 est par exemple utilisé afin que le dispositif d'insertion 5 atteigne le sommet de la pile 24 verticale de tronçons de garnissage 2 et surplombe celui-ci, tel que cela est illustré sur la figure 5. Ceci étant fait, et une fois la structure porteuse 4 disposée autour de la pile 24 verticale de tronçons de garnissage 2, le mouvement de translation 35 permet de rapprocher le dispositif d'insertion 5 de la pile 24 de tronçons de garnissage 2 afin d'agripper le tronçon de garnissage 2 au sommet de ladite pile 24 via les moyens d'accroche 6. Une fois qu'un tronçon de garnissage 2 est agrippé, le dispositif d'insertion 5 est de nouveau déplacé de manière verticale afin de soulever le tronçon de garnissage 2 agrippé.

La figure 6 illustre une étape de rotation du dispositif d'insertion 5 et une étape de déplacement du système d'insertion 1 jusqu'à la virole 3. Ces deux étapes surviennent après qu'un tronçon de garnissage 2 a été agrippé par les moyens d'accroche 6. Pour assurer l'étape de rotation du dispositif d'insertion 5 par rapport à la structure porteuse 4, le dispositif d'insertion 5 comprend des moyens de mise en rotation, ici via le système d'engrenages illustré sur la figure 1, assurant au moins une rotation 36 à 90° ou sensiblement 90° du dispositif d'insertion 5 par rapport à la structure porteuse 4. Le deuxième moteur 26 peut être porté par la structure porteuse 4 et piloté de sorte que l'arbre de sortie moteur actionne le système d'engrenages et donc la rotation 36 du dispositif d'insertion 5 par rapport à la structure porteuse 4. Ce dispositif de rotation entraîné par le deuxième moteur 26 permet ainsi au dispositif d'insertion 5 de basculer entre une première position dite verticale, permettant d'agripper les tronçons de garnissage 2 sur la pile 24 de tronçons de garnissage 2 tel que cela est illustré en figure 5, et une deuxième position dite horizontale afin d'agencer le tronçon de garnissage 2 agrippé en regard de la virole 3 horizontale tel que cela est illustré sur la figure 6.

Par la suite, la structure porteuse 4 peut se déplacer tout en portant le dispositif d'insertion 5 dans le but de rapprocher le tronçon de garnissage 2 agrippé de la virole 3 afin de l'y insérer, par exemple grâce aux rails 34 tel qu'évoqué précédemment. Afin de stabiliser la virole 3, celle-ci peut être disposée sur des appuis 37.

La figure 7 illustre l'étape de positionnement du dispositif d'insertion 5 à l'entrée de la virole 3 ainsi que l'étape de poussée du tronçon de garnissage 2 au sein de la virole 3. Afin de positionner correctement le tronçon de garnissage 2 à l'entrée de la virole 3, la position verticale du dispositif d'insertion 5 peut éventuellement être ajustée grâce au mouvement de translation vertical le long des piliers 7 de la structure porteuse 4 afin que le tronçon de garnissage 2 agrippé soit parfaitement en regard de l'entrée de la virole 3. Ceci étant fait, les crochets 28 viennent se refermer sur la collerette 29 de la virole 3 afin de maintenir le dispositif d'insertion 5 en regard de l'entrée de la virole 3.

L'étape de poussée débute après que les moyens d'accroche 6 lâchent le tronçon de garnissage 2. Après le relâchement du tronçon de garnissage 2 par les moyens d'accroche 6 et avant que les dispositifs télescopiques 22 ne soient déployés pour insérer le tronçon de garnissage 2, ce dernier peut par exemple reposer sur un support de maintien 38 afin que le tronçon de garnissage 2 reste positionné correctement en regard de l'entrée de la virole. Les dispositifs télescopiques 22 se déploient alors afin que le moyen de poussée 23 insère le tronçon de garnissage 2 au sein de la virole 3, tel que ce qui a été décrit précédemment. Une fois l'insertion du tronçon de garnissage 2 effectuée, les dispositifs télescopiques 22 peuvent se rétracter, et le système d'insertion 1 peut de nouveau se déplacer pour récupérer le tronçon de garnissage 2 suivant. Le procédé d'insertion recommence alors à partir de l'étape d'agrippement décrite en figure 5.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'était fixée, et permet de proposer un dispositif d'insertion d'un tronçon de garnissage au sein d'une virole comprenant un module de déploiement permettant d'assurer l'agrippement de tronçons de garnissage de différents diamètres. Des variantes non décrites ici pourraient être mises en oeuvre sans sortir du contexte de l'invention, dès lors que, conformément à l'invention, elles comprennent un dispositif d'insertion conforme à l'invention.

## Revendications

1. Dispositif d'insertion (5) d'au moins un tronçon de garnissage (2) pour une colonne de séparation gaz/liquide au sein d'une virole (3) cylindrique, **caractérisé en ce qu'**un module de déploiement (8) comporte un montant principal (9), centré autour d'un axe principal (11) du dispositif d'insertion, et une pluralité de montants périphériques (10) agencés de manière circonférentielle et régulière autour de l'axe principal (11), chacun des montants périphériques (10) comprenant un moyen d'accroche (6) configuré pour agripper un tronçon de garnissage (2), le module de déploiement (8) comprenant une pluralité de branches (12) agencées en duos de branches (12,13) reliant le montant principal (9) à l'un des montants périphériques (10), le module de déploiement (8) étant apte à modifier la dimension du dispositif d'insertion (5) en modifiant une distance radiale entre le montant principal (9) et chacun des montants périphériques (10).

2. Dispositif d'insertion (5) selon la revendication 1, dans lequel le montant principal (9) comprend un corps télescopique (18) apte à modifier une dimension principale du montant principal (9).

3. Dispositif d'insertion (5) selon la revendication précédente, dans lequel le montant principal (9) comprend deux bagues fixes (17, 17a, 17b), chaque bague fixe étant agencée au niveau de chacune des portions terminales du montant principal (9), les deux bagues fixes (17, 17a, 17b) étant séparées par une distance modifiable par le corps télescopique (18).

4. Dispositif d'insertion (5) selon la revendication précédente, dans lequel chaque branche (12) des duos de branches (13) comprend une première extrémité (14) fixée à l'une des bagues fixes (17, 17a, 17b) du montant principal et une deuxième extrémité (15) fixée au montant périphérique (10).

5. Dispositif d'insertion (5) selon la revendication précédente, dans lequel la deuxième extrémité (15) d'au moins une des branches (12) du duo de branches (13) est apte à coulisser le long du montant périphérique (10).

6. Dispositif d'insertion (5) selon l'une quelconque des revendications précédentes, dans lequel chaque branche (12) des duos de branches (13) est liée l'une à l'autre par une liaison pivot (16).

7. Dispositif d'insertion (5) selon l'une quelconque des revendications précédentes, comprenant des moyens de verrouillage (20) configurés pour figer la distance radiale entre le montant principal (9) et les montants périphériques (10).

8. Dispositif d'insertion (5) selon la revendication précédente, dans lequel les moyens de verrouillage (20) sont formés par des tiges déployables s'étendant entre deux montants périphériques (10) adjacents.

9. Dispositif selon l'une des revendications précédentes dans lequel les deux branches (12) du duo de branches (13) sont sécantes entre elles et de préférence sont liées entre elles au niveau de leur point d'intersection.

10. Système d'insertion (1) d'au moins un tronçon de garnissage (2) pour une colonne de séparation gaz/liquide au sein d'une virole (3) cylindrique, comprenant une structure porteuse (4) et un dispositif d'insertion (5) selon l'une quelconque des revendications précédentes, le dispositif d'insertion (5) étant porté par la structure porteuse (4).

11. Système d'insertion (1) selon la revendication précédente, dans lequel le dispositif d'insertion (5) est porté par la structure porteuse (4) de manière à pouvoir effectuer dans son ensemble un mouvement de translation par rapport à la structure porteuse (4).

12. Système d'insertion (1) selon la revendication 10 ou 11, dans lequel le dispositif d'insertion (5) est porté par la structure porteuse (4) de manière à pouvoir effectuer dans son ensemble un mouvement de rotation par rapport à la structure porteuse (4).

13. Procédé d'insertion d'au moins un tronçon de garnissage (2) pour une colonne de séparation gaz/liquide au sein d'une virole (3) cylindrique mis en oeuvre par un système d'insertion (1) selon l'une quelconque des revendications 10 à 12, comprenant :
• une étape d'ajustement de la distance radiale entre le montant principal (9) et les montants périphériques (10) du module de déploiement (8),
• une étape d'agrippement d'un tronçon de garnissage (2) par les moyens d'accroche (6) du dispositif d'insertion (5),
• une étape de rotation dans son ensemble du dispositif d'insertion (5) par rapport à la structure porteuse (4),
• une étape de déplacement du système d'insertion (1) jusqu'à la virole (3) grâce à la structure porteuse (4),
• une étape de positionnement du tronçon de garnissage (2) au niveau d'une entrée de la virole (3),
• une étape de poussée du tronçon de garnissage (2) au sein de la virole (3).
